# EUROPÄISCHE PATENTSCHRIFT

(11) **EP 3 344 504 B1**
(45) Veröffentlichungstag und Bekanntmachung des Hinweises auf die Patenterteilung: **08.04.2020**
(21) Anmeldenummer: 16751281.3
(22) Anmeldetag: 09.08.2016
(51) Int. Cl.: B60W 10/06, B60W 10/115, B60W 30/18, F16H 61/04

(54) **VERFAHREN ZUM BETREIBEN EINES MEHRSTUFENGETRIEBES IN EINEM KRAFTFAHRZEUG**
METHOD FOR OPERATING A MULTISPEED TRANSMISSION IN A MOTOR VEHICLE
PROCÉDÉ PERMETTANT DE FAIRE FONCTIONNER UNE TRANSMISSION À PLUSIEURS RAPPORTS DANS UN VÉHICULE AUTOMOBILE

(30) Priorität: 03.09.2015 DE 102015011519
(43) Veröffentlichungstag der Anmeldung: 11.07.2018
(73) Patentinhaber: Audi AG, 85045 Ingolstadt (DE)
(72) Erfinder: ENKE, Martin, 85057 Ingolstadt (DE)
(86) Internationale Anmeldenummer: PCT/EP2016/068940
(87) Internationale Veröffentlichungsnummer: WO 2017/036742

(56) Entgegenhaltungen:
- DE-A1-102010 000 857
- DE-A1-102013 200 946

## Beschreibung

Die Erfindung betrifft ein Verfahren zum Betreiben eines Mehrstufengetriebes in einem Kraftfahrzeug nach dem Oberbegriff des Patentanspruches 1.

Ein solches Mehrstufengetriebe kann in Planetenbauweise ausgeführt sein und als Anfahrelement einen zum Beispiel hydrodynamisch arbeitenden Drehmomentwandler aufweisen. Die Planetenradsätze in dem Mehrstufengetriebe können mittels Reibungs- bzw. Schaltelementen, wie etwa Kupplungen und Bremsen, geschaltet werden.

Aus der DE 10 2005 002 337 A1 ist ein Mehrstufengetriebe bekannt, auf das das erfindungsgemäße Verfahren anwendbar ist. Das Mehrstufengetriebe weist insgesamt vier axial hintereinander angeordnete Planetengetriebe auf, die über Eingangselemente und Ausgangselemente mit einer angetriebenen Eingangswelle und mit einer Abtriebswelle verbindbar sind. Die vier Planetengetriebe können mittels zweier Bremsen sowie mittels dreier Schaltkupplungen in insgesamt acht Vorwärts-Übersetzungsstufen geschaltet werden.

In dem obigen Mehrstufengetriebe ist in den höheren Übersetzungsstufen, insbesondere die vierte bis achte Übersetzungsstufe, eine der Schaltkupplungen durchgängig geschaltet, um im Getriebe einen Kraftfluss herzustellen. Zur Bereitstellung eines Segelmodus in diesen höheren Übersetzungsstufen bietet sich an, die in den höheren Gängen permanent geschaltete Schaltkupplung zu öffnen, um den Kraftfluss im Getriebe zu unterbrechen.

Im Segelmodus wird in gängiger Praxis die Antriebsmaschine vom Abtrieb entkoppelt, und zwar zum Beispiel durch Unterbrechen des Kraftflusses zwischen der Getriebeeingangswelle und der Getriebeausgangswelle. In diesem Fall rollt das Kraftfahrzeug ohne oder mit reduzierter Kraftstoffverbrennung sowie ohne antriebsmaschinenseitigem Schleppmoment ungehindert weiter, wodurch der Kraftstoffverbrauch reduzierbar ist. Ein solcher Segelmodus ist beispielhaft aus der DE 10 2010 000 857 A1 bekannt.

Aus der DE 10 2010 000 857 A1 ist ein gattungsgemäßes Verfahren zum Betreiben eines Fahrzeugantriebsstranges mit einer Antriebsmaschine und mit einer Getriebeeinrichtung mit mehreren Schaltelementen bekannt. Aus der DE 10 2013 200 946 A1 ist ein Verfahren zum Betreiben eines Kraftfahrzeugs bekannt.

Die Aufgabe der Erfindung besteht darin, ein Verfahren zum Betreiben eines Mehrstufengetriebes bereitzustellen, bei dem die Verfügbarkeit des Segelmodus im Vergleich zum Stand der Technik gesteigert ist.

Die Aufgabe ist durch die Merkmale des Patentanspruches 1 gelöst. Bevorzugte Weiterbildungen der Erfindung sind in den abhängigen Ansprüchen offenbart.

Gemäß dem Patentanspruch 1 wird zur Bereitstellung des Segelmodus in den höheren Übersetzungsstufen die erste Schaltkupplung D geöffnet wird. Zur Bereitstellung des Segelmodus in den niedrigeren Übersetzungsstufen wird dagegen die zweite oder die dritte Schaltkupplung C, E geöffnet.

Dadurch ist erreicht, dass der Segelmodus nicht nur bei höheren Geschwindigkeitsbereichen, sondern auch bei geringeren Geschwindigkeitsbereichen aktivierbar ist, wodurch die Segel-Verfügbarkeit für den Fahrzeugnutzer gesteigert ist.

In einer technischen Umsetzung des Mehrstufengetriebes können die vier Planetengetriebe axial hintereinander angeordnet sein. Die Eingangswelle kann radial innerhalb von drei axial hintereinander angeordneten Innenhohlwellen geführt sein, von denen die Innenhohlwelle die Sonnenräder der ersten und zweiten Planetengetriebe drehfest trägt und über eine Bremse am Getriebegehäuse festbremsbar ist. Die zweite Innenhohlwelle kann das Sonnenrad des dritten Planetengetriebes drehfest tragen und über einen Verbindungsflansch sowie eine zweite Außenhohlwelle mit dem Hohlrad des zweiten Planetengetriebes fest verbunden sein. Zudem kann die zweite Innenhohlwelle über die dritte Schaltkupplung trieblich an die dritte Innenhohlwelle anbindbar sein. Die das Sonnenrad des vierten Planetengetriebes drehfest tragende dritte Innenhohlwelle kann über die zweite Schaltkupplung C an der Eingangswelle anbindbar sein und über einen zweiten Verbindungsflansch sowie eine vierte Außenhohlwelle drehfest mit dem Hohlrad des dritten Planetengetriebes verbunden sein.

Außerdem kann der Steg des ersten Planetengetriebes über eine radial äußere Außenhohlwelle drehfest mit dem Hohlrad des vierten Planetengetriebes verbunden sein. Das Hohlrad des ersten Planetengetriebes kann über eine zweite Bremse B am Getriebegehäuse festbremsbar sein, während der Steg des dritten Planetengetriebes über eine dritte Außenhohlwelle sowie unter Zwischenschaltung der ersten Schaltkupplung D an den Steg des vierten Planetengetriebes ankoppelbar sein kann. Der Steg des vierten Planetengetriebes kann über einen dritten Verbindungsflansch mit der Abtriebswelle fest verbunden sein.

In dem obigen Mehrstufengetriebe ist in den niedrigeren Übersetzungsstufen, das heißt der ersten, zweiten und dritten Übersetzungsstufe, die erste Schaltkupplung D geöffnet, während in der ersten Übersetzungsstufe und in der dritten Übersetzungsstufe die zweite Schaltkupplung C geschlossen ist. In der zweiten Übersetzungsstufe ist dagegen die dritte Schaltkupplung E geschlossen und die zweite Schaltkupplung C geöffnet.

Zur Bereitstellung des Segelmodus in der ersten Übersetzungsstufe oder in der dritten Übersetzungsstufe wird die zweite Schaltkupplung C geöffnet. Zur Bereitstellung des Segelmodus in der zweiten Übersetzungsstufe kann die dritte Schaltkupplung E geöffnet werden. Zur Bereitstellung des Segelmodus in der vierten bis achten Übersetzungsstufe kann dagegen die erste Schaltkupplung D geöffnet werden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einem Blockschaltbild ein Mehrstufengetriebe in Planetenbauweise; und
- Fig. 2: ein Schaltschema zum Schalten von Übersetzungsstufen im Mehrstufengetriebe.

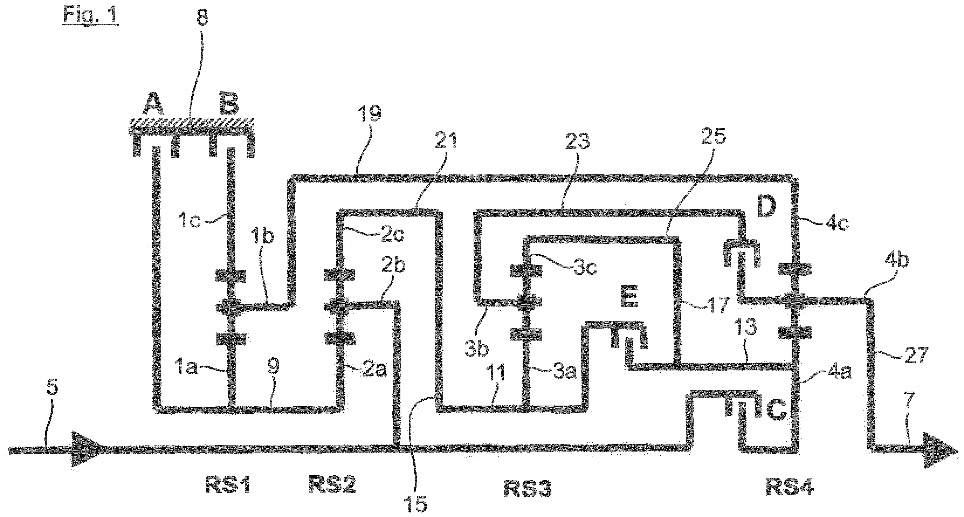

Nachfolgend ist anhand der Fig. 1 der Aufbau eines Mehrstufengetriebes für ein Kraftfahrzeug beschrieben. Das Mehrstufengetriebe weist insgesamt vier durch Schaltelemente A, B, C, D in unterschiedliche Übersetzungsstufen umschaltbare Planetengetrieben RS1 bis RS4 auf. Diese sind über Eingangselemente und Ausgangselemente mit einer angetriebenen Eingangswelle 5 und mit einer Abtriebswelle 7 verbindbar. Der Eingangswelle 5 kann als Anfahrelement ein nicht dargestellter Drehmomentenwandler vorgeschaltet sein.

Die vier Planetengetriebe RS1 bis RS4 sind mittels zweier Bremsen A, B und mittels dreier Schaltkupplungen C, D, E in acht Vorwärts-Übersetzungsstufen umschaltbar. In der Fig. 1 sind die vier Planetengetriebe RS1 bis RS4 axial hintereinander angeordnet, wobei die Eingangswelle 5 als eine Vollwelle durch drei axial hintereinander angeordnete Innenhohlwellen 9, 11, 13 geführt ist.

Die in der Momentenflußrichtung erste Innenhohlwelle 9 trägt drehfest die Sonnenräder 1a, 2a der ersten und zweiten Planetengetriebe RS1, RS2 und ist über eine Bremse A am Getriebegehäuse 8 festbremsbar. Die zweite Innenhohlwelle 11 trägt drehfest das Sonnenrad 3a des dritten Planetengetriebes RS3 und ist über einen Verbindungsflansch 15 und eine zweite Außenhohlwelle 21 mit dem Hohlrad 2c des zweiten Planetengetriebes RS2 fest verbunden. Außerdem ist die zweite Innenhohlwelle 11 über die dritte Schaltkupplung E trieblich an die dritte Innenhohlwelle 13 anbindbar.

Die dritte Innenhohlwelle 13 trägt drehfest das Sonnenrad 4a des vierten Planetengetriebes RS4. Zudem ist die dritte Innenhohlwelle 13 über die zweite Schaltkupplung C an die Eingangswelle 5 anbindbar und über einen zweiten Verbindungsflansch 17 sowie eine vierte Außenhohlwelle 25 drehfest mit dem Hohlrad 3c des dritten Planetengetriebes RS3 verbunden.

Der Steg 1b des ersten Planetengetriebes RS1 ist über eine radial äußere Außenhohlwelle 19 mit dem Hohlrad 4c des vierten Planetengetriebes RS4 drehfest verbunden. Das Hohlrad 1c des ersten Planetengetriebes RS1 ist über eine zweite Bremse B am Getriebegehäuse 8 festbremsbar. Außerdem ist der Steg 3b des dritten Planetengetriebes RS3 über eine dritte Außenhohlwelle 23 sowie unter Zwischenschaltung der ersten Schaltkupplung D an den Steg 4b des vierten Planetengetriebes RS4 ankoppelbar, wobei der Steg 4b über einen dritten Verbindungsflansch 27 mit der Abtriebswelle 7 fest verbunden ist.

Das Hohlrad 1c des ersten Planetengetriebes RS1 ist über eine zweite Bremse B am Getriebegehäuse 8 festbremsbar.

Auf diese Weise ergibt sich eine abtriebsnahe Anordnung der Schaltkupplungen C, D, E. Die Schaltkupplungen C, D, E werden, je nach geschalteter Übersetzungsstufe, zur Aktivierung einer Segelfunktion geöffnet. In einem solchen Segelmodus, das heißt bei abgekoppelter Antriebsmaschine, wird aufgrund der abtriebsnahen Anordnung der Schaltkupplungen C, D, E auch das im Getriebe gebildete Schleppmoment reduziert.

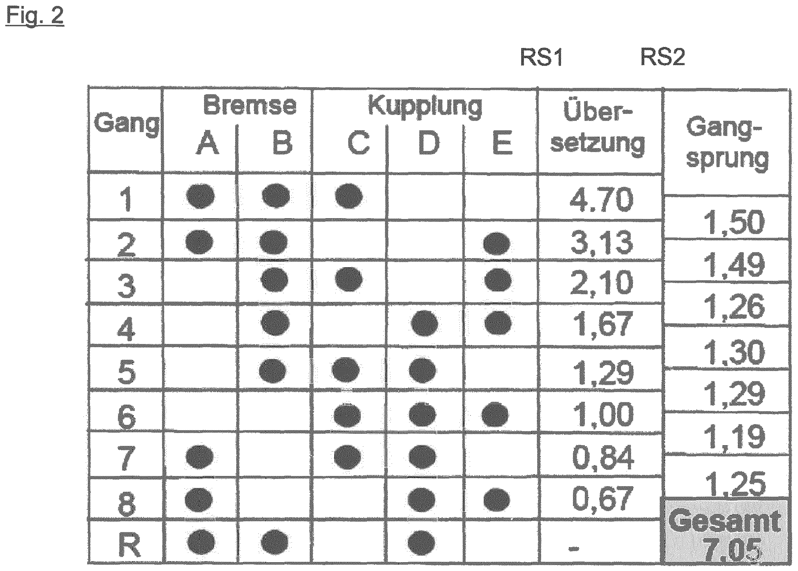

Wie aus dem Schaltschema der Fig. 2 hervorgeht, sind im Mehrschaltgetriebe insgesamt acht Vorwärts-Übersetzungsstufen schaltbar. In den höheren Übersetzungsstufen, das heißt die vierte bis achte Übersetzungsstufe, ist die erste Schaltkupplung D durchgängig geschaltet, um im Getriebe einen Kraftfluss herzustellen. In den niedrigeren Übersetzungsstufen, das heißt der ersten, zweiten und dritten Übersetzungsstufe, ist die erste Schaltkupplung D geöffnet. Zudem ist in der ersten und dritten Übersetzungsstufe die zweite Schaltkupplung C geschlossen, wobei in der zweiten Übersetzungsstufe die dritte Schaltkupplung E geschlossen ist.

Erfindungsgemäß wird zur Bereitstellung eines Segelmodus in den vierten bis achten Übersetzungsstufen die erste Schaltkupplung D geöffnet, wodurch der Kraftfluss im Getriebe unterbrochen ist. Zur Bereitstellung des Segelmodus in der ersten oder in der dritten Übersetzungsstufe wird dagegen die zweite Schaltkupplung C geöffnet. Zur Bereitstellung des Segelmodus in der zweiten Übersetzungsstufe wird die dritte Schaltkupplung E geöffnet.

## Patentansprüche

1. Verfahren zum Betreiben eines Mehrstufengetriebes in einem Kraftfahrzeug, mit vier durch Schaltelemente (A, B, C, D) in unterschiedliche Übersetzungsstufen umschaltbare Planetengetriebe (RS1 bis RS4), die über Eingangselemente und Ausgangselemente mit einer angetriebenen Eingangswelle (5) und mit einer Abtriebswelle (7) verbindbar sind und deren Reaktionselemente kuppelbar oder festbremsbar sind, wobei die vier Planetengetriebe (RS1 bis RS4) mittels zwei Bremsen (A, B) und mittels drei Schaltkupplungen (C, D, E) in acht Vorwärts-Übersetzungsstufen umschaltbar sind, wobei in den höheren Übersetzungsstufen, insbesondere die vierte bis achte Übersetzungsstufe, zumindest eine erste Schaltkupplung (D) durchgängig geschaltet ist, um im Getriebe einen Kraftfluss herzustellen, und in den niedrigen Übersetzungsstufen, insbesondere die erste bis dritte Übersetzungsstufe, zumindest eine zweite und/oder dritte Schaltkupplung (C, E) geschaltet ist, um im Getriebe einen Kraftfluss herzustellen, wobei in einem Segelmodus bei eingelegter bzw. geschalteter Übersetzungsstufe der Kraftfluss im Getriebe durch Öffnen einer der Schaltkupplungen (C, D, E) unterbrochen wird, wobei zur Bereitstellung des Segelmodus in den höheren Übersetzungsstufen die erste Schaltkupplung (D) geöffnet wird, und dass zur Bereitstellung des Segelmodus in den niedrigeren Übersetzungsstufen die zweite oder die dritte Schaltkupplung (C, E) geöffnet wird, wobei in den niedrigeren Übersetzungsstufen, das heißt der ersten, zweiten und dritten Übersetzungsstufe, die erste Schaltkupplung (D) geöffnet ist, und wobei in der ersten und dritten Übersetzungsstufe die zweite Schaltkupplung (C) geschlossen ist, und dass in der zweiten Übersetzungsstufe die dritte Schaltkupplung (E) geschlossen ist, **dadurch gekennzeichnet, dass** zur Bereitstellung des Segelmodus in der ersten oder dritten Übersetzungsstufe die zweite Schaltkupplung (C) geöffnet wird.

2. Verfahren nach Anspruch 1, **dadurch gekennzeichnet, dass** die vier Planetengetriebe (RS1 bis RS4) axial hintereinander angeordnet sind, und dass die Eingangswelle (5) radial innerhalb von drei axial hintereinander angeordneten Innenhohlwellen (9, 11, 13) geführt ist, von denen die erste Innenhohlwelle (9) die Sonnenräder (1a, 2a) der ersten und zweiten Planetengetriebe (RS1, RS2) drehfest trägt und über eine Bremse (A) am Getriebegehäuse (8) festbremsbar ist, und die zweite Innenhohlwelle (11) das Sonnenrad (3a) des dritten Planetengetriebes (RS3) drehfest trägt und über einen Verbindungsflansch (15) und eine zweite Außenhohlwelle (21) mit dem Hohlrad (2c) des zweiten Planetengetriebes (RS2) fest verbunden ist sowie über die dritte Schaltkupplung (E) trieblich an die dritte Innenhohlwelle (13) anbindbar, wobei die dritte Innenhohlwelle (13) das Sonnenrad (4a) des vierten Planetengetriebes (RS4) drehfest trägt, über die zweite Schaltkupplung (C) an der Eingangswelle (5) anbindbar ist und über einen zweiten Verbindungsflansch (17) sowie eine vierte Außenhohlwelle (25) drehfest mit dem Hohlrad (3c) des dritten Planetengetriebes (RS3) verbunden ist.

3. Verfahren nach Anspruch 2, **dadurch gekennzeichnet, dass** der Steg (1b) des ersten Planetengetriebes (RS1) über eine radial äußere Außenhohlwelle (19) drehfest mit dem Hohlrad (4c) des vierten Planetengetriebes (RS4) verbunden ist.

4. Verfahren nach Anspruch 1, 2 oder 3, **dadurch gekennzeichnet, dass** das Hohlrad (1c) des ersten Planetengetriebes (RS1) über eine zweite Bremse (B) am Getriebegehäuse (8) festbremsbar ist.

5. Verfahren nach einem der vorhergehenden Ansprüche, **dadurch gekennzeichnet, dass** der Steg (3b) des dritten Planetengetriebes (RS3) über eine dritte Außenhohlwelle (23) sowie unter Zwischenschaltung der ersten Schaltkupplung (D) an den Steg (4b) des vierten Planetengetriebes (RS4) ankoppelbar ist, wobei der Steg (4b) über einen dritten Verbindungsflansch (27) mit der Abtriebswelle (7) fest verbunden ist.

6. Verfahren nach einem der vorhergehenden Ansprüche, **dadurch gekennzeichnet, dass** zur Bereitstellung des Segelmodus in der zweiten Übersetzungsstufe die dritte Schaltkupplung (E) geöffnet wird.

## Claims

1. Method for operating a multi-stage transmission in a motor vehicle, comprising four planetary gears (RS1 to RS4) which can be shifted into different gear ratios by means of shift elements (A, B, C, D) and which can be connected via input elements and output elements to a driven input shaft (5) and to an output shaft (7) and whose reaction elements can be coupled or braked, wherein the four planetary gears (RS1 to RS4) can be shifted by means of two brakes (A, B) and by means of three shifting clutches (C, D, E) into eight forward gear ratios, wherein in the higher gear ratios, in particular the fourth to eighth gear ratio, at least a first shifting clutch (D) is continuously switched in order to produce a flow of power in the transmission, and in the lower gear ratios, in particular the first to third gear ratios, at least a second and/or third shifting clutch (C, E) is switched in order to produce a flow of power in the transmission, wherein in a coasting mode, with the gear ratio engaged or switched, the flow of power in the transmission is interrupted by opening of one of the shifting clutches (C, D, E), wherein to provide the coasting mode in the higher gear ratios the first shifting clutch (D) is opened, and that to provide the coasting mode in the lower gear ratios the second or third shifting clutch (C, E) is opened, wherein in the lower gear ratios, that is to say the first, second and third gear ratio, the first shifting clutch (D) is opened, and wherein in the first and third gear ratio the second shifting clutch (C) is closed, and that in the second gear ratio the third shifting clutch (E) is closed, **characterised in that** to provide the coasting mode in the first or third gear ratio the second shifting clutch (C) is opened.

2. Method according to claim 1, **characterised in that** the four planetary gears (RS1 to RS4) are arranged axially one behind the other, and **in that** the input shaft (5) is guided radially inside three hollow inner shafts (9, 11, 13) arranged axially one behind the other, of which the first hollow inner shaft (9) carries the sun gears (1a, 2a) of the first and second planetary gears (RS1, RS2) in a rotationally fixed manner and can be braked via a brake (A) on the gear housing (8), and the second hollow inner shaft (11) carries the sun gear (3a) of the third planetary gear (RS3) in a rotationally fixed manner and is fixedly connected to the ring gear (2c) of the second planetary gear (RS2) via a connecting flange (15) and a second hollow outer shaft (21) and can be connected in a driving manner to the third hollow inner shaft (13) via the third shifting clutch (E), wherein the third inner hollow shaft (13) carries the sun gear (4a) of the fourth planetary gear (RS4) in a rotationally fixed manner, can be connected to the input shaft (5) via the second shifting clutch (C) and is connected in a rotationally fixed manner to the ring gear (3c) of the third planetary gear (RS3) via a second connecting flange (17) and a fourth outer hollow shaft (25).

3. Method according to claim 2, **characterised in that** the carrier (1b) of the first planetary gear (RS1) is connected in a rotationally fixed manner to the ring gear (4c) of the fourth planetary gear (RS4) via a radially outer hollow shaft (19).

4. Method according to claim 1, 2 or 3, **characterised in that** the ring gear (1c) of the first planetary gear (RS1) can be braked via a second brake (B) on the gear housing (8).

5. Method according to any one of the preceding claims, **characterised in that** the carrier (3b) of the third planetary gear (RS3) can be coupled to the carrier (4b) of the fourth planetary gear (RS4) via a third external hollow shaft (23) and with intermediate switching of the first shifting clutch (D), the carrier (4b) being fixedly connected to the output shaft (7) via a third connecting flange (27).

6. Method according to any one of the preceding claims, **characterised in that** to provide the coasting mode in the second gear ratio the third shifting clutch (E) is opened.

## Revendications

1. Procédé pour faire fonctionner une transmission à plusieurs rapports dans un véhicule automobile, avec quatre engrenages planétaires (RS1 à RS4) commutables dans différents rapports de transmission par des éléments de commutation (A, B, C, D), qui peuvent être reliés par le biais d'éléments d'entrée et d'éléments de sortie à un arbre d'entrée entraîné (5) et à un arbre de sortie (7) et dont les éléments de réaction peuvent être embrayés ou freinés, dans lequel les quatre engrenages planétaires (RS1 à RS4) sont commutables dans huit rapports de transmission de marche avant au moyen de deux freins (A, B) et au moyen de trois embrayages (C, D, E), dans lequel dans les rapports de transmission supérieurs, en particulier le quatrième à huitième rapport de transmission, au moins un premier embrayage (D) est commuté en continu afin d'établir un flux de force dans la transmission, et dans les rapports de transmission inférieurs, en particulier le premier à troisième rapport de transmission, au moins un deuxième et/ou troisième embrayage (C, E) est commuté afin d'établir un flux de force dans la transmission, dans lequel dans un mode planeur lorsque le rapport de transmission est engagé ou commuté, le flux de force dans la transmission est interrompu par l'ouverture d'un des embrayages (C, D, E), dans lequel le premier embrayage (D) est ouvert pour la mise à disposition du mode planeur dans les rapports de transmission supérieurs, et que le deuxième ou le troisième embrayage (C, E) est ouvert pour la mise à disposition du mode planeur dans les rapports de transmission inférieurs, dans lequel dans les rapports de transmission inférieurs, c'est-à-dire le premier, deuxième et troisième rapport de transmission, le premier embrayage (D) est ouvert, et dans lequel dans le premier et troisième rapport de transmission, le deuxième embrayage (C) est fermé, et que dans le deuxième rapport de transmission, le troisième embrayage (E) est fermé, **caractérisé en ce que** le deuxième embrayage (C) est ouvert pour la mise à disposition du mode planeur dans le premier ou troisième rapport de transmission.

2. Procédé selon la revendication 1, **caractérisé en ce que** les quatre engrenages planétaires (RS1 à RS4) sont agencés axialement les uns derrière les autres, et que l'arbre d'entrée (5) est guidé radialement à l'intérieur de trois arbres creux intérieurs (9, 11, 13) agencés axialement les uns derrière les autres, dont le premier arbre creux intérieur (9) porte solidaire en rotation les roues solaires (1a, 2a) du premier et deuxième engrenage planétaire (RS1, RS2) et peut être freiné au niveau de la boîte de vitesses (8) par le biais d'un frein (A), et le deuxième arbre creux intérieur (11) porte solidaire en rotation la roue solaire (3a) du troisième engrenage planétaire (RS3) et est relié solidement à la roue creuse (2c) du deuxième engrenage planétaire (RS2) par le biais d'une bride de liaison (15) et d'un deuxième arbre creux extérieur (21) et peut être rattaché de manière motrice au niveau du troisième arbre creux intérieur (13) par le biais du troisième engrenage (E), dans lequel le troisième arbre creux intérieur (13) porte solidaire en rotation la roue solaire (4a) du quatrième engrenage planétaire (RS4), peut être rattaché au niveau de l'arbre d'entrée (5) par le biais du deuxième embrayage (C) et est relié solidaire en rotation à la roue creuse (3c) du troisième engrenage planétaire (RS3) par le biais d'une deuxième bride de liaison (17) ainsi que d'un quatrième arbre creux extérieur (25).

3. Procédé selon la revendication 2, **caractérisé en ce que** la branche (1b) du premier engrenage planétaire (RS1) est relié solidaire en rotation à l'arbre creux (4c) du quatrième engrenage planétaire (RS4) par le biais d'un arbre creux extérieur radialement extérieur (19).

4. Procédé selon la revendication 1, 2 ou 3, **caractérisé en ce que** la roue creuse (1c) du premier engrenage planétaire (RS1) peut être freinée au niveau de la boîte de vitesses (8) par le biais d'un deuxième frein (B).

5. Procédé selon l'une quelconque des revendications précédentes, **caractérisé en ce que** la branche (3b) du troisième engrenage planétaire (RS3) peut être accouplée à la branche (4b) du quatrième engrenage planétaire (RS4) par le biais d'un troisième arbre creux extérieur (23) ainsi que par interposition du premier embrayage (D), dans lequel la branche (4b) est reliée solidement à l'arbre de sortie (7) par le biais d'une troisième bride de liaison (27).

6. Procédé selon l'une quelconque des revendications précédentes, **caractérisé en ce que** le troisième embrayage (E) est ouvert pour la mise à disposition du mode planeur dans le deuxième rapport de transmission.
